# EUROPEAN PATENT APPLICATION

(11) **EP 4 236 035 A1**
(43) Date of publication of application: **30.08.2023**
(21) Application number: 23152352.3
(22) Date of filing: 19.01.2023
(51) Int. Cl.: H02K 1/14, H02K 11/215, H02K 21/16, H02K 21/22

(54) **MOTOR WITH A PLURALITY OF STATOR MODULES AND MOTOR STATOR THEREOF**

(30) Priority: 25.02.2022 TW 111107108; 25.08.2022 TW 111132083
(71) Applicant: Sunonwealth Electric Machine Industry Co., Ltd., Kaohsiung City / Taiwan, R.O.C. (TW)
(72) Inventor: HONG, Ching-Shen, Kaohsiung City (TW); JIAN, Wei-Qian, Kaohsiung City (TW)
(74) Representative: Wagner, Jürgen

(57) **Abstract**

A motor includes a plurality of stator modules (1), a plurality of circuit boards (2), a rotor (3), and a sensing module (4) coupled to the circuit boards (2). The stator modules (1) are detachably assembled into a stator assembly. Each stator module (1) includes pole posts (11) and coils of different phases wound around the pole posts (11). Each circuit board (2) is electrically connected to the coils of an associated stator module (1). Each circuit board (2) independently switches the associated stator module (1) between the different phases. A power source (Vcc) supplies power to the coils via the circuit boards (2). The rotor (3) includes at least one magnetic member (31) which has magnetic poles corresponding to the coils of the stator modules (1). The sensing module (4) detects a magnetic field change of the at least one magnetic member (31) responsive to a movement of the rotor (3), determines a rotational position of the rotor (3), and informs each circuit board (2) about the rotational position of the rotor (3).

## Description

### BACKGROUND OF THE INVENTION

### 1. Field of the Invention

The present invention relates to a power driven device and, more particularly, to a motor including a plurality of stator modules and a stator of the motor, in which the stator modules can operate independently to permit separate winding and replacement.

### 2. Description of the Related Art

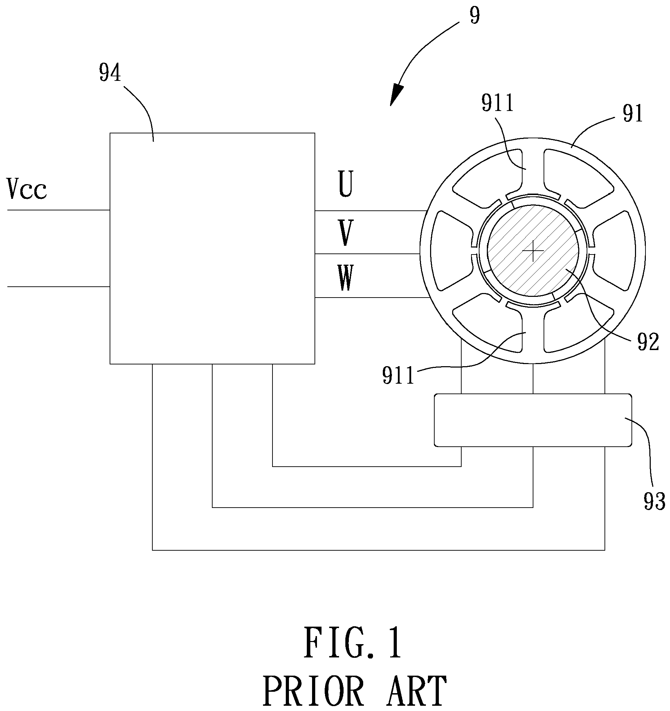

Please refer to FIG. 1 showing a conventional motor 9. The conventional motor 9 includes a stator 91, a rotor 92, a sensing module 93, and a driving circuit 94. The conventional motor 9 is a three-phase motor. The stator 91 has six slots, and the rotor 92 has four magnetic poles. The driving circuit 94 is electrically connected to the windings of the stator 91 via three phase wires U, V, and W. Therefore, the electric current provided by the power source Vcc is alternately guided into different windings according to the phase change to thereby drive the rotor 92 to rotate. The sensing module 93 detects the rotating direction and the rotating speed via three position sensors and converts the rotating direction and the rotating speed into phase information to enable the driving circuit 94 to proceed with phase switching.

The three-phase windings of the above conventional motor 9 are respectively wound around six pole posts 911 of the stator 91. Two pole posts 911 wound by coils of the same phase are respectively located on two opposite sides of the stator 91, such that the coils must extend across other pole posts 911 during the wire winding process, resulting in difficulties. Furthermore, when the wires break or have a poor contact, the motor 9 will become unable to operate and, thus, require replacement of windings, causing difficulty in maintenance and an increase of the costs.

Thus, it is necessary to improve the conventional motor.

### SUMMARY OF THE INVENTION

To solve the above problem, it is an objective of the present invention to provide a motor with a plurality of stator modules which can be detached independently to reduce the difficulties in wire winding and maintenance.

It is another objective of the present invention to provide a motor with a plurality of stator modules which can reduce the specification requirements of electronic parts.

It is a further objective of the present invention to provide a motor stator in which each stator module thereof can independently drive a motor having the motor stator to operate.

It is still another objective of the present invention to provide a stator assembly which can reduce the manufacturing costs of the motor stator.

As used herein, the term "a", "an" or "one" for describing the number of the elements and members of the present invention is used for convenience, provides the general meaning of the scope of the present invention, and should be interpreted to include one or at least one. Furthermore, unless explicitly indicated otherwise, the concept of a single component also includes the case of plural components.

A motor with a plurality of stator modules according to the present invention includes a plurality of stator modules, a plurality of circuit boards, a rotor, and a sensing module. The plurality of stator modules is detachably assembled into a stator assembly. Each of the plurality of stator modules includes a plurality of pole posts and a plurality of coils of different phases wound around the plurality of pole posts. Each of the plurality of circuit boards is electrically connected to the plurality of coils of an associated one of the plurality of stator modules. Each of the plurality of circuit boards independently switches the associated one of the plurality of stator modules between the different phases. A power source supplies power to the plurality of coils via the plurality of circuit boards. The rotor includes at least one magnetic member which has a plurality of magnetic poles corresponding to the plurality of coils of the plurality of stator modules. The sensing module is coupled to the plurality of circuit boards. The sensing module detects a magnetic field change of the at least one magnetic member responsive to a movement of the rotor, determines a rotational position of the rotor, and informs each of the plurality of circuit boards about the rotational position of the rotor.

A motor stator according to the present invention includes a plurality of stator modules and a plurality of circuit boards. The plurality of stator modules is detachably assembled into a stator assembly. Each of the plurality of stator modules includes a plurality of pole posts and a plurality of coils of different phases wound around the plurality of pole posts. Each of the plurality of circuit boards is electrically connected to the plurality of coils of an associated one of the plurality of stator modules. Each of the plurality of circuit boards independently switches the associated one of the plurality of stator modules between the different phases.

Thus, in the motor with a plurality of stator modules according to the present invention, by independently supplying power to the plurality of stator modules, the output power of the motor can be dispersed to the plurality of stator modules. Even if one of the stator modules malfunctions, the motor can still operate. Furthermore, each of the plurality of stator modules that is detachable may permit separate wire winding and maintenance while sharing the same mold for production, thereby reducing specification requirement of the electronic parts, simplifying installation, permitting easy maintenance, and reducing the manufacturing costs.

In an example, the plurality of stator modules is engaged with and surrounds an outer periphery of the rotor, and the at least one magnetic member is disposed adjacent to and along the outer periphery of the rotor. Thus, an inner-rotor motor can be formed to reduce the manufacturing costs.

In an example, the rotor surrounds the plurality of stator modules, and the at least one magnetic member is disposed on an inner periphery of the rotor. Thus, an outer-rotor motor can be formed to provide high-efficiency output.

In an example, the plurality of pole posts of each of plurality of stator modules is spaced at regular intervals, and the number of the plurality of pole posts is an integer multiple of the number of phases of the motor. Thus, each of the plurality of stator modules can be independently switched between different phases and provide a stable output, thereby obtaining a motor in which each stator module individually provides an output to drive the rotor to rotate.

In an example, the plurality of circuit boards is coupled to the plurality of stator modules, respectively. Thus, the plurality of coils of the plurality of pole posts can be in direct electrical connection with the circuit boards and save the disposition space of the motor, thereby reducing the volume of the motor.

In an example, north poles and south poles of the plurality of magnetic poles are alternately disposed and face each of the plurality of stator modules, and each of the plurality of magnetic poles is spaced from an associated coil by an air gap. Thus, the electromagnetic force provided by each of the plurality of coils can actuate the plurality of magnetic members, thereby providing stable rotational kinetic energy.

In an example, the sensing module includes a plurality of sensing units disposed on one of the plurality of circuit boards. Thus, when the rotor rotates, the plurality of sensing units can detect the magnetic field change responsive to movement of the plurality of magnetic poles relative to the circuit board, thereby enabling determination of the relative movement between the stator assembly and the rotor.

In an example, the sensing module includes a control unit coupled to the plurality of sensing units, and the control unit determines the rotational position of the rotor according to a magnetic field change detected by the plurality of sensing units. Thus, the control unit can determine the rotational condition of the rotor, thereby providing phase switching information to the circuit boards.

In an example, the motor further comprises an operational unit coupled to the power source and the plurality of circuit boards. The operational unit controls the power source and the plurality of circuit boards to stop supplying power to one of the plurality of stator modules which is malfunctioning and to increase power output to the others of the plurality of stator modules. Thus, by the provision of the operational unit which can stop malfunctioning stator modules and make up the driving power deficiency for the motor, stable operation of the motor can be maintained.

In an example, the motor further includes a backup sensing module coupled to the plurality of circuit boards. When the sensing module malfunctions, the backup sensing module informs each of the plurality of circuit boards about the rotational position of the rotor. Thus, when the sensing module malfunctions, the precise rotational position of the rotor can still be continuously provided to maintain stable operation of the motor.

### BRIEF DESCRIPTION OF THE DRAWINGS

The present invention will become more fully understood from the detailed description given hereinafter and the accompanying drawings which are given by way of illustration only, and thus are not limitative of the present invention, and wherein:
FIG. 1 is a schematic view of a conventional motor.
FIG. 2 is an exploded, perspective view of a motor with a plurality of stator modules of a first embodiment according to the present invention.
FIG. 3 is a perspective view of the motor of the first embodiment according to the present invention.
FIG. 4 is a control circuit diagram for the motor of the first embodiment according to the present invention.
FIG. 5 is an exploded, perspective view of a motor with a plurality of stator modules of a second embodiment according to the present invention.
FIG. 6 is a perspective view of the motor of the second embodiment according to the present invention.

When the terms "front", "rear", "left", "right", "up", "down", "top", "bottom", "inner", "outer", "side", and similar terms are used herein, it should be understood that these terms have reference only to the structure shown in the drawings as it would appear to a person viewing the drawings and are utilized only to facilitate describing the invention, rather than restricting the invention.

### DETAILED DESCRIPTION OF THE INVENTION

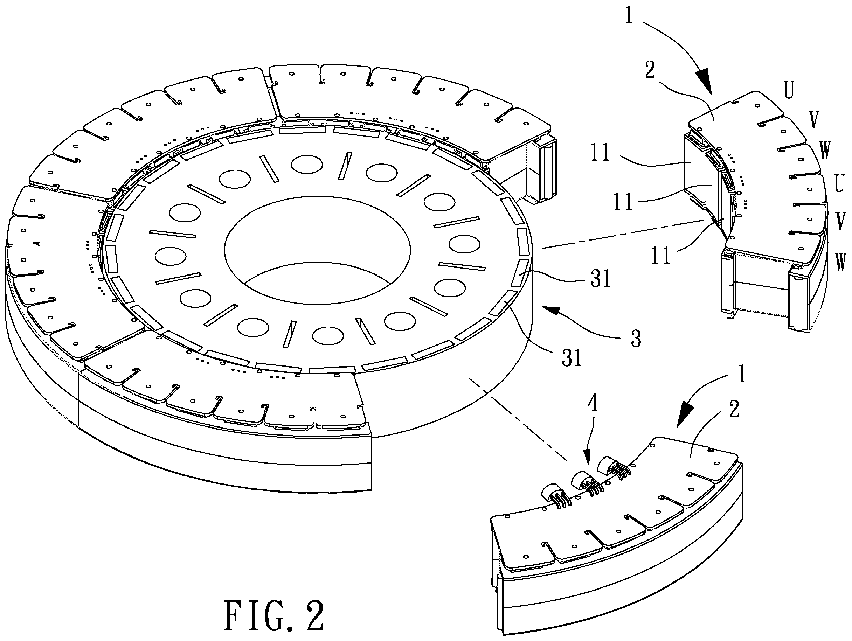

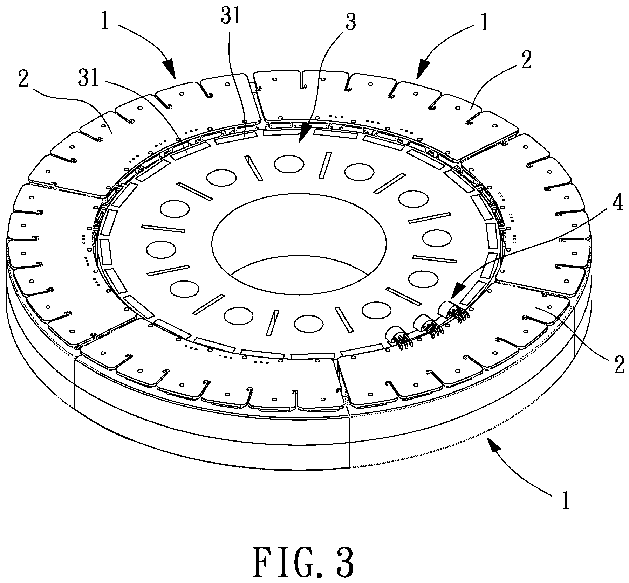

With reference to FIGs. 2 and 3, a motor with a plurality of stator modules of a first embodiment according to the present invention includes a plurality of stator modules 1, a plurality of circuit boards 2, a rotor 3, and a sensing module 4. The plurality of stator modules 1 may be assembled with each other and surround an outer periphery of the rotor 3, forming an inner-rotor motor. Each of the plurality of circuit boards 2 is coupled to an associated one of the plurality of stator modules 1 and the sensing module 4.

Each of the plurality of stator modules 1 includes a plurality of pole posts 11 preferably spaced at regular intervals, such that a plurality of coils of different phases is wound around the plurality of pole posts 11. Therefore, each of the plurality of stator modules 1 is multi-phased. The number of the plurality of pole posts 11 is preferably an integer multiple of the number of the phases of the motor. For example, in this embodiment, six stator modules 1 are detachably assembled into a three-phase stator assembly. Each stator module 1 extends across 60 degrees about an axis of the motor. Moreover, each stator module 1 includes six pole posts 11. The phases of the coils wound around the six pole posts 11 are U, V, W, U, V, W, respectively. Each stator module 1 may further include a bobbin which covers upper and lower surfaces of the plurality of pole posts 11, such that the coils are wound around the plurality of pole posts 11 covered by the bobbin.

Each of the plurality of circuit boards 2 is electrically connected to the coils of each phase on each of the plurality of stator modules 1. The wiring method of each of the plurality of circuit boards 2 may be a delta connection method including connecting the coils of each phase end to end and then electrically connecting three of the phase connecting points to the circuit board 2, or a star connection method including connecting an end of each coil of each phase and then connecting another end of each coil of each phase to the circuit board 2. The present invention is not limited in this regard. In this embodiment, the six circuit boards 2 are electrically connected to the six stator modules 1 one to one. Each circuit board 2 may independently energize the coils of the associated stator module 1 to drive the motor to rotate. Nevertheless, the six stator modules 1 can be electrically connected to the same circuit board 2, and the plurality of stator modules 1 are not in direct electrical connection. Therefore, among the plurality of stator modules 1, the coils, even of the same phase, will not extend across a stator module 1 to form serial connection or parallel connection, such that the circuit board 2 can independently control energization of the coils of each phase of the six stator modules 1. However, the present invention is not limited in this regard. The plurality of circuit boards 2 is preferably engaged with the plurality of stator modules 1, respectively, which can reduce the extending distance of wires connected to the coils and reduce the volume of the motor.

The rotor 3 includes at least one magnetic member 31 disposed adjacent to and along an outer periphery of the rotor 3. The at least one magnetic member 31 may have a plurality of magnetic poles formed thereon, such that the plurality of magnetic poles is aligned with and spaced from the coils of the plurality of stator modules 1 by an air gap. North poles and south poles of the plurality of magnetic poles are alternately disposed and face each of the plurality of stator modules 1, such that the rotor 3 can be driven by stable electromagnetic force to rotate. In this embodiment, the rotor 3 includes four magnetic members 31 corresponding to six pole posts 11 of each stator module 1, and a north pole or a south pole of each magnetic member 31 faces each pole post 11, forming an independently operable motor structure with six slots and four magnetic poles. Six stator modules 1 surround the rotor 3 and are assembled to form an inner-rotor motor with 36 slots and 24 magnetic poles.

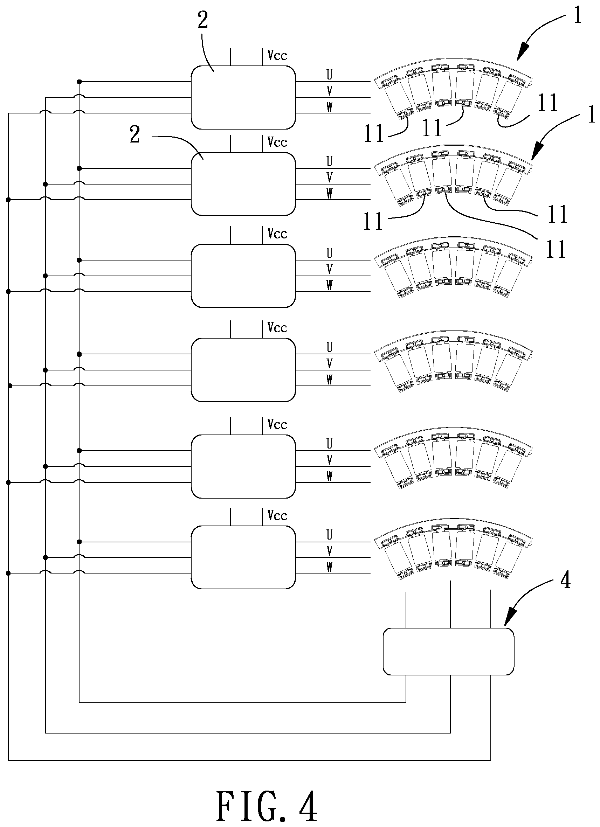

With reference to FIGs. 3 and 4, the motor with a plurality of stator modules according to the present invention may further include a sensing module 4 having a plurality of sensing units. Each of the plurality of sensing units may be a Hall sensor. The plurality of sensing units may be spaced from each other and disposed on one of the plurality of circuit boards 2. When the rotor 3 rotates relative to the circuit board 2 and the plurality of sensing units, the sensing module 4 may detect the magnetic field change caused by alternate passing of the north and south poles of the at least one magnetic member 31. The sensing module 4 further includes a control unit coupled to the plurality of sensing units. The control unit may determine the real-time rotational position of the rotor 3 according to the magnetic field change detected by the plurality of sensing units. Furthermore, the sensing module 4 is coupled to the plurality of circuit boards 2, such that the plurality of circuit boards 2 can synchronously receive the detection result of the sensing module 4. Each of the plurality of circuit boards 2 may independently proceed with phase switching of an associated stator module 1 electrically connected thereto according to the current rotational position of the rotor 3. In this embodiment, the motor with a plurality of stator modules is a three-phase motor, and the sensing module 4 preferably includes three sensing units. Furthermore, the motor with a plurality of stator modules may include two or more sensing modules 4 (not shown) to provide a backup sensing module. When any sensing unit malfunctions, the motor can switch to the backup sensing module to proceed with detection, continuously providing the precise rotational angle of the rotor 3 to thereby maintain stable operation of the motor.

With reference to FIGs. 3 and 4, a power source Vcc supplies power to the plurality of coils on the plurality of pole posts 11 by the plurality of circuit boards 2. The power source Vcc may have a lower specification requirement in the power for separately driving the plurality of stator modules 1, and the powers sum up as the overall power output of the motor, thereby reducing the requirement in specification of each electronic part. Furthermore, the plurality of pole post 11 has coils of phases U, V, W, and each of the plurality of circuit boards 2 can output electric signals of each phase U, V, W, such that each of the plurality of stator modules 1 can independently drive the rotor 3 to rotate. When one of the plurality of stator modules 1 malfunctions, the remaining stator modules 1 can still operate. Similarly, the plurality of stator modules 1 can be stopped in turn to switch the motor to a low-power working state, achieving functions of saving energy and reducing loss of elements.

The motor with a plurality of stator modules according to the present invention may further include an operational unit (not shown) coupled to the power source Vcc and the plurality of circuit boards 2. According to the change in the electric current of each circuit board 2 or a signal indicating abnormality of the rotor 3 generated by the circuit board 2, the operational unit can determine whether the stator module 1 associated with the circuit board 2 operates normally. When the operational unit finds that any of the stator modules 1 malfunctions, the operational unit switches the associated circuit board 1 to an OFF state or controls the power source Vcc to independently stop supplying power to the circuit board 2, thereby stopping the malfunctioning stator module 1. The operational unit may further control the power source Vcc to increase the voltage output or control the other circuit boards 2 to increase the duty cycle of pulse-width modulation (PWM) signal, thereby increasing the operating power of the other stator modules 1 which operate normally. This can fill in deficiency in the driving energy caused by the malfunctioning stator module 1, such that a stable output power can be maintained in a case that the number of stator modules 1 of the motor is reduced.

The plurality of stator modules 1 may be independently installed or removed. Therefore, during maintenance of the motor, only the malfunctioning stator module 1 is replaced, and the wire winding procedure of each separable stator module 1 is easier and more convenient than a stator that is integrally formed, thereby providing convenience in wire winding, installation, and maintenance. Furthermore, each of the plurality of stator modules 1 may be of the same structure, and all stator modules 1 can be produced with the same mold. Moreover, the volume of the mold is smaller than that of a mold for producing the whole stator, thereby reducing the manufacturing costs.

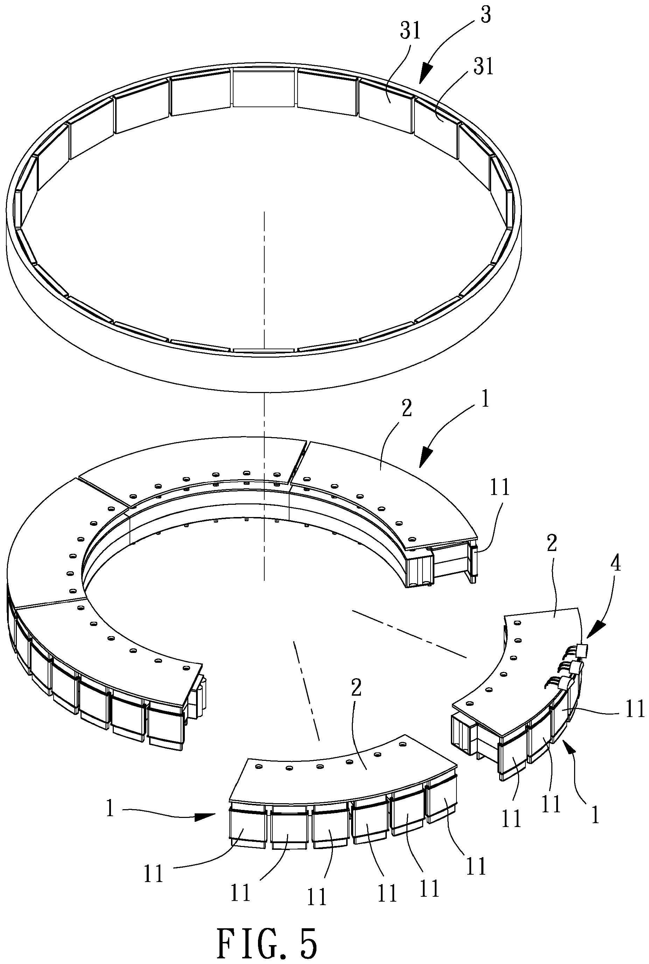

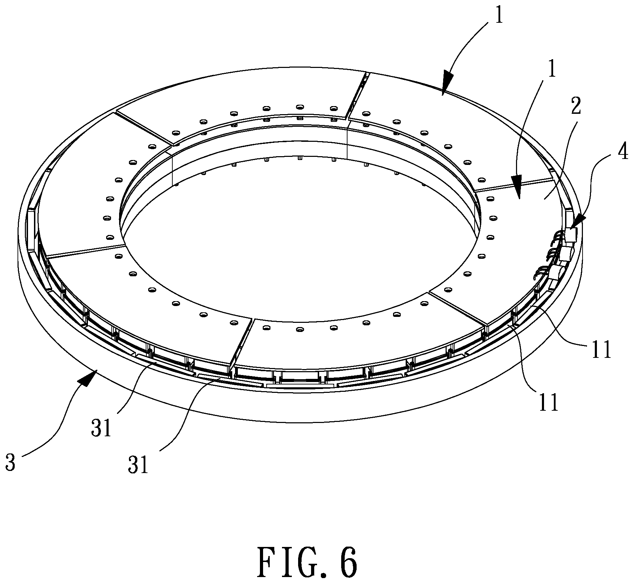

Please refer to FIGs. 5 and 6 showing a motor with a plurality of stator modules of a second embodiment according to the present invention. This embodiment is substantially the same as the first embodiment. In this embodiment, the rotor 3 surrounds the plurality of stator modules 1 to form an outer-rotor motor. The at least one magnetic member 31 is disposed on an inner periphery of the rotor 3, such that the coils of each of the plurality of stator modules 1 face outward and are aligned with associated magnetic poles.

Furthermore, the structures of the plurality of stator modules 1 and the rotor 3 according to the present invention may be applicable to stators and rotors of generators.

In summary, in the motor with a plurality of stator modules according to the present invention, by independently supplying power to the plurality of stator modules, the output power of the motor can be dispersed to the plurality of stator modules. Even if one of the stator modules malfunctions, the motor can still operate. Furthermore, each of the plurality of stator modules that is detachable may permit separate wire winding and maintenance while sharing the same mold for production, thereby reducing the specification requirement of electronic parts, simplifying installation, permitting easy maintenance, and reducing the manufacturing costs.

## Claims

1. A motor **characterized in** comprising:
a plurality of stator modules (1) detachably assembled into a stator assembly, wherein each of the plurality of stator modules (1) includes a plurality of pole posts (11) and a plurality of coils of different phases wound around the plurality of pole posts (11);
a plurality of circuit boards (2), wherein each of the plurality of circuit boards (2) is electrically connected to the plurality of coils of an associated one of the plurality of stator modules (1), wherein each of the plurality of circuit boards (2) independently switches the associated one of the plurality of stator modules (1) between the different phases, and wherein a power source (Vcc) supplies power to the plurality of coils via the plurality of circuit boards (2);
a rotor (3) including at least one magnetic member (31), wherein the at least one magnetic member (31) includes a plurality of magnetic poles corresponding to the plurality of coils of the plurality of stator modules (1); and
a sensing module (4) coupled to the plurality of circuit boards (2), wherein the sensing module (4) detects a magnetic field change of the at least one magnetic member (31) responsive to a movement of the rotor (3), determines a rotational position of the rotor (3), and informs each of the plurality of circuit boards (2) about the rotational position of the rotor (3).

2. The motor as claimed in claim 1, **characterized in that** the plurality of stator modules (1) is engaged with and surrounds an outer periphery of the rotor (3), and wherein the at least one magnetic member (31) is disposed adjacent to and along the outer periphery of the rotor (3).

3. The motor as claimed in claim 1, **characterized in that** the rotor (3) surrounds the plurality of stator modules (1), and wherein the at least one magnetic member (31) is disposed on an inner periphery of the rotor (3).

4. The motor as claimed in any of claims 1 to 3, **characterized in that** the plurality of pole posts (11) of each of plurality of stator modules (1) is spaced at regular intervals, and wherein a number of the plurality of pole posts (11) is an integer multiple of a number of phases of the motor.

5. The motor as claimed in any of claims 1 to 4, **characterized in that** the plurality of circuit boards (2) is coupled to the plurality of stator modules (1), respectively.

6. The motor as claimed in any of claims 1 to 5, **characterized in that** north poles and south poles of the plurality of magnetic poles are alternately disposed and face each of the plurality of stator modules (1), and wherein each of the plurality of magnetic poles is spaced from an associated coil by an air gap.

7. The motor as claimed in any of claims 1 to 6, **characterized in that** the sensing module (4) includes a plurality of sensing units disposed on one of the plurality of circuit boards (2).

8. The motor as claimed in claim 7, **characterized in that** the sensing module (4) includes a control unit coupled to the plurality of sensing units, and wherein the control unit determines the rotational position of the rotor (3) according to a magnetic field change detected by the plurality of sensing units.

9. The motor as claimed in any of claims 1 to 8, **characterized in** further comprising an operational unit coupled to the power source (Vcc) and the plurality of circuit boards (2), wherein the operational unit controls the power source (Vcc) and the plurality of circuit boards (2) to stop supplying power to one of the plurality of stator modules (1) which is malfunctioning and to increase power output to the others of the plurality of stator modules (1).

10. The motor as claimed in any of claims 1 to 9, **characterized in** further comprising a backup sensing module coupled to the plurality of circuit boards (2), wherein when the sensing module (4) malfunctions, the backup sensing module informs each of the plurality of circuit boards (2) about the rotational position of the rotor (3).

11. A motor stator **characterized in** comprising:
a plurality of stator modules (1) detachably assembled into a stator assembly, wherein each of the plurality of stator modules (1) includes a plurality of pole posts (11) and a plurality of coils of different phases wound around the plurality of pole posts (11); and
a plurality of circuit boards (2), wherein each of the plurality of circuit boards (2) is electrically connected to the plurality of coils of an associated one of the plurality of stator modules (1), wherein each of the plurality of circuit boards (2) independently switches the associated one of the plurality of stator modules (1) between the different phases.
